# EUROPEAN PATENT SPECIFICATION

(11) **EP 3 369 589 B1**
(45) Date of publication and mention of the grant of the patent: **18.08.2021**
(21) Application number: 16859996.7
(22) Date of filing: 28.10.2016
(51) Int. Cl.: B60C 11/03

(54) **PNEUMATIC TIRE FOR MOTORCYCLES**
LUFTREIFEN FÜR MOTORRÄDER
PNEU POUR MOTOCYCLETTES

(30) Priority: 29.10.2015 JP 2015212746; 17.11.2015 JP 2015225218; 17.11.2015 JP 2015225221; 17.11.2015 JP 2015225223
(43) Date of publication of application: 05.09.2018
(73) Proprietor: Bridgestone Corporation, Tokyo 104-8340 (JP)
(72) Inventor: TOKITOH Yasufumi, Tokyo 104-8340 (JP); TAKAHASHI Junichi, Tokyo 104-8340 (JP); ITOI, Dyta, Tokyo 104-8340 (JP); NAKAMURA Takamitsu, Tokyo 104-8340 (JP)
(74) Representative: Oxley, Robin John George
(86) International application number: PCT/JP2016/082169
(87) International publication number: WO 2017/073768

(56) References cited:
- EP-A1- 0 604 383
- EP-A1- 2 752 310
- JP-A- 2009 220 781
- JP-A- 2013 180 664
- JP-A- 2013 180 664
- JP-A- 2013 519 562
- JP-A- 2014 131 899
- US-A- 5 358 020

## Description

### TECHNICAL FIELD

The present invention relates to a pneumatic tire for a motorcycle (hereinafter also simply referred to as "tire"), and particularly to a pneumatic tire for a motorcycle that can early exhibit performance of a new tire and that enables it to be visually confirmed that the new tire is worn to a degree that the tire can fully exhibit the performance.

### BACKGROUND ART

Typically, a vulcanization step in a process for manufacturing a pneumatic tire is performed by arranging a tire vulcanizing bladder in an unvulcanized tire placed in a mold and expanding the tire vulcanizing bladder by steam to closely contact the unvulcanized tire with the mold. A completely vulcanized tire is taken out from a vulcanizing apparatus, but at this time, needs to be smoothly separated from the vulcanizing apparatus.

To solve such a problem, conventionally, adhesion of a vulcanized tire has been prevented by previously spraying a silicone-based release agent or the like onto the upper mold portion of a vulcanizing apparatus. Besides this, for example, Patent Document 1 has employed means, such as separating a closely-contacted vulcanized tire by making a modification in which a separation jig is provided without using any release agent. Attention is also drawn to the disclosures of EP0604383A1, US5358020A, JP2013-180664A and EP2752310A1.

### RELATED ART DOCUMENT

### PATENT DOCUMENT

Patent Document 1: Japanese Unexamined Patent Application Publication No. H06-218734

### SUMMARY OF THE INVENTION

### PROBLEMS TO BE SOLVED BY THE INVENTION

In a tire manufactured by using a release agent in vulcanizing an unvulcanized tire, silicone or the like as a component of the release agent moves to a tread portion, whereby original performance of the tire cannot be fully exhibited when the tire is new. Accordingly, to fully exhibit the performance of the new tire, it is necessary to remove the silicone or the like moved to the tread portion by causing the tread portion to wear to a certain degree.

Accordingly, it is an object of the present invention to provide a pneumatic tire for a motorcycle that is capable of early exhibiting performance of a new tire and that enables it to be visually confirmed that the new tire is worn to a degree that the tire can fully exhibit the performance.

### MEANS FOR SOLVING THE PROBLEMS

As a result of extensive studies to solve the above problem, the inventors of the present invention have gained the following knowledge. Specifically, the inventors have found that providing shallow grooves in a tread portion of a new tire promotes wear of the tread portion, thus enabling performance of the new tire to be early exhibited and enabling it to be visually confirmed that the new tire is worn to a degree that the tire can fully exhibit the performance, so that the above problem can be solved, thereby leading to completion of the invention.

Specifically, a pneumatic tire for a motorcycle according to the present invention is a pneumatic tire for a motorcycle including a tread portion formed into a ring shape, the tread portion being provided with circumferential shallow grooves formed by extending shallow grooves having a width of 0.1 to 2.0 mm and a depth of 0.1 to 2.0 mm in a tire circumferential direction, wherein the width of the shallow grooves provided in the tread portion is changed in a direction of extension of the shallow grooves.

In the tire of the invention, preferably, the shallow grooves further include widthwise shallow grooves extending in a tire width direction, and when a ground contact region of the tread portion during straight running is defined as a center region and both outer sides of the center region in a tire width direction are defined as shoulder regions, one of a total length of contour lines of the circumferential shallow grooves or a total length of contour lines of the widthwise shallow grooves is longer than the other in either the center region or the shoulder regions.

Furthermore, in the tire of the invention, preferably, when a contact region of the tread portion during straight running is defined as a center region and both outer sides of the center region in a tire width direction are defined as shoulder regions, at least two kinds of shallow grooves having a width of 0.1 to 2.0 mm and a depth of 0.1 to 2.0 mm and extending in different directions are provided in plurality in at least the shoulder regions, in which at least some of the shallow grooves intersect, and at least some of the shallow grooves are open at a tread end.

Still furthermore, in the tire of the invention, the number of the shallow grooves may be larger in the center region than the shoulder regions of the tread portion, or may be larger in the shoulder regions than the center region of the tread portion. In addition, in the tire of the invention, the depth of the shallow grooves may be deeper in the center region than the shoulder regions of the tread portion, or may be deeper in the shoulder regions than the center region of the tread portion. Furthermore, in the tire of the invention, the width of the shallow grooves may be wider in the center region than the shoulder regions of the tread portion, or may be wider in the shoulder regions than the center region of the tread portion. Still furthermore, in the tire of the invention, preferably, the shallow grooves are continuous in the circumferential direction.

Herein, the tire circumferential direction used to indicate the direction in which the shallow grooves extend means a range of ±45° with respect to a tire equator, and the tire width direction means a range of more than -45° and less than 45°with respect to a direction perpendicular to the tire equator. It should be noted that when the shape of the shallow grooves is not a straight line, the direction of the shallow grooves means a direction of a line connecting both ends of the shallow grooves. Additionally, the center region of the tread portion means a ground contact region during straight running in a state where the tire is mounted on a specified rim, filled with a specified inner pressure, and is loaded at a maximum applied load, and the shoulder regions mean regions that are on tire widthwise outer sides from the center region on the tread portion. Furthermore, the "specified rim" as used herein refers to a standard rim ("approved rim" or "recommended rim") in applicable size described in predetermined industrial standards, and the specified inner pressure refers to an air pressure corresponding to a maximum load (a maximum load capacity) for a single wheel in applicable size described in the standards. Still furthermore, the maximum applied load refers to a maximum load (a maximum load capacity) for a single wheel in applicable size described in the standards. Regarding the industrial standards, respectively valid standards are determined in regions producing or using tires. These standards are stipulated, for example, by "The Tire and Rim Association Inc. Year Book" (including a design guide) in the United States of America, by "The European Tire and Rim Technical Organization Standards Manual" in Europe, and by" JATMA YEAR BOOK" of Japan Automobile Tyre Manufacturers Association in Japan, respectively.

### EFFECTS OF THE INVENTION

The present invention can provide a pneumatic tire for a motorcycle that is capable of early exhibiting performance of a new tire and that enables it to be visually confirmed that the new tire is worn to a degree that the tire can fully exhibit the performance.

### BRIEF DESCRIPTION OF THE DRAWINGS

FIG. 1 is a schematically developed view of a tread portion of a pneumatic tire for a motorcycle according to one form, which is not according to the present invention, but which is useful for understanding the present invention.
FIGS. 2 are schematic plan views illustrating examples of a shape of shallow grooves in a pneumatic tire for a motorcycle according to one form, which is not according to the present invention, but which is useful for understanding the present invention.
FIGS. 3 are schematic cross-sectional views illustrating examples of a cross-sectional shape in a shallow groove widthwise direction of circumferential shallow grooves according to one preferable embodiment of the pneumatic tire for a motorcycle of the invention.
FIGS. 4 are schematic plan views illustrating examples of a change in width in the directions of extension of the shallow grooves according to one preferable embodiment of the pneumatic tire for a motorcycle of the invention.
FIG. 5 is a schematically developed view of a tread portion of a pneumatic tire for a motorcycle according to another form, which is not according to the present invention, but which is useful for understanding the present invention.
FIG. 6 is a schematically developed view of a tread portion of a pneumatic tire for a motorcycle according to still another form, which is not according to the present invention, but which is useful for understanding the present invention.
FIG. 7 is a schematically developed view of a tread portion of a pneumatic tire for a motorcycle according to still another form, which is not according to the present invention, but which is useful for understanding the present invention.
FIG. 8 is a schematic cross-sectional view in a widthwise direction of a pneumatic tire for a motorcycle according to one preferable embodiment of the invention.

### MODE FOR CARRYING OUT THE INVENTION

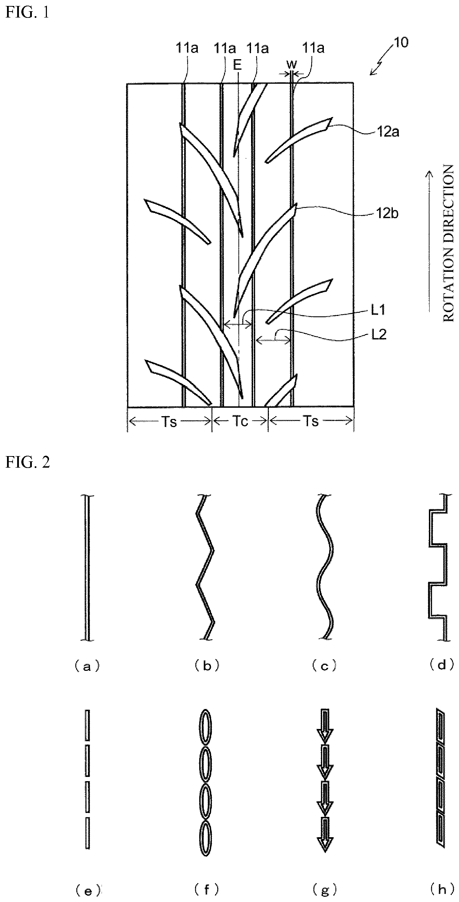

Hereinafter, a pneumatic tire for a motorcycle according to the present invention will be described in detail by using the drawings. FIG. 1 depicts a schematically developed view of a tread portion of a pneumatic tire for a motorcycle according to one form, which is not according to the present invention, but which is useful for understanding the present invention. An arrow in the drawing represents a rotation direction, and the tire will contact with the ground from an arrow-side leading end thereof during traveling. The tire includes a tread portion 10 formed into a ring shape, and the tread portion 10 is provided with shallow grooves 11 in a tire circumferential direction (hereinafter also referred to as "circumferential shallow grooves 1 1a"). In the illustrated example, there are provided two circumferential shallow grooves 11a in a center region Tc and each one circumferential shallow groove 11a in both shoulder regions Ts. It should be noted that, although two kinds of main grooves 12a and 12b are periodically provided at an equal pitch in the illustrated example, the shape of the main grooves 12 is not particularly limited and not limited to the above example. For example, as the main grooves, circumferential grooves formed continuously in the circumferential direction may be provided. Additionally, besides the circumferential shallow grooves 11a, shallow grooves extending in a tire width direction (hereinafter also referred to as "widthwise shallow grooves") may be provided.

The following effects can be obtained by providing the circumferential shallow grooves 11a in the tread portion 10. First, in a new tire, silicone used in a tire vulcanization step is on a surface layer thereof, and therefore the tire is slippery when it is new. Thus, to fully exhibit performance of the tire, it is necessary to allow the surface layer of the tread portion 10 to be worn to some degree. Providing the circumferential shallow grooves 1 1a in the tread portion 10 facilitates wear of the tread portion 10, thereby enabling the performance of a new tire to be exhibited early. Additionally, the circumferential shallow grooves 11a improve drainage performance, and also facilitate movement of rubber of the tread portion 10 during contact with the ground, whereby heat generation is promoted, so that grip performance can be early exhibited. In addition, the circumferential shallow grooves 11a can also improve appearance.

The width of the circumferential shallow grooves 11a is from 0.1 to 2.0 mm, and preferably from 0.5 to 1.5 mm. When the width of the circumferential shallow grooves 11a is less than 0.1 mm, sufficient drainage performance may not be obtained. On the other hand, when the width thereof is more than 2.0 mm, rigidity of the tread portion 10 is reduced, which deteriorates steering stability and reduces a ground-contact area, so that sufficient grip may not be obtained. Herein, a width w of the circumferential shallow grooves 11a refers to the width of opening portions in a cross section perpendicular to a direction in which the circumferential shallow grooves 11a extend. Additionally, when the width of the circumferential shallow grooves 11a changes in the direction of extension of the circumferential shallow groove 11a, the width w refers to a widest part of the circumferential shallow grooves 11a.

Additionally, the depth of the circumferential shallow grooves 11a is from 0.1 to 2.0 mm, and preferably from 0.2 to 0.5 mm. When the depth of the circumferential shallow grooves 11a is less than 0.1 mm, sufficient drainage performance may not be obtained. On the other hand, when the depth thereof is more than 2.0 mm, rigidity of the tread portion 10 is still reduced, which may deteriorate steering stability. Herein, when the depth of the circumferential shallow grooves 11a is changed in the direction of extension of the circumferential shallow grooves 11a, the depth thereof refers to a deepest part of the circumferential shallow grooves 11a. It should be noted that although uneven wear may occur if deep grooves having a depth exceeding 2.0 mm are provided, such a problem does not occur in the tire of the invention. Additionally, the depth of the circumferential shallow grooves 11a refers to a distance from a tread surface of the tread portion 10 to a groove bottom of the circumferential shallow grooves 11a, and does not include protrusions provided on the groove bottom of the circumferential shallow grooves 11a. Herein, the protrusions refer to ones whose peripheral contour shape is a curvilinear shape, such as a circular, elliptical, or any other curvilinear shape, or a polygonal shape, such as a parallelogram, a rhombus, or other polygon.

Additionally, the circumferential shallow grooves 11a extend in the tire circumferential direction, but do not necessarily have to be continuous, and may be discontinuous. It is sufficient that the circumferential shallow grooves are provided in preferably 50% or more, and more preferably 90% or more of a circumferential length on a tire equator E under normal inner pressure and no-load conditions. Furthermore, the shape of the circumferential shallow grooves 11a is not particularly limited, and may be a straight linear shape extending in the tire circumferential direction, as depicted in FIG. 1, or may be a zigzag shape or a wavy shape. It should be noted that if straight-linear shaped shallow grooves are provided on a tire having a spiral belt extending in the tire circumferential direction immediately under the tread portion 10, cracks will occur in the tread portion 10, and therefore such a tire is preferably of a zigzag shape or a wavy shape. FIGS. 2(a) to 2(h) depict schematic plan views illustrating examples of a shape of shallow grooves in a pneumatic tire for a motorcycle according to one form, which is not according to the present invention, but which is useful for understanding the present invention. However, the shape of the circumferential shallow grooves 11a is not limited thereto.

FIG. 2(a) depicts a shallow groove linearly extending in the circumferential direction; FIG. 2(b) depicts a shallow groove extending in a zigzag shape in the circumferential direction; FIG. 2(c) depicts a shallow groove extending in a wavy shape in the circumferential direction; and FIG. 2(d) depicts a shallow groove extending alternately in the circumferential direction and a widthwise direction, but entirely extending in the circumferential direction. FIG. 2(e) depicts shallow grooved extending discontinuously and linearly in the circumferential direction; FIG. 2(f) depicts a plurality of shallow grooves formed into a substantially elliptical shape provided in the circumferential direction and entirely extending in the circumferential direction; FIG. 2(g) depicts a plurality of shallow grooves formed into an arrow shape provided in the circumferential direction and entirely extending in the circumferential direction; and FIG. 2(h) depicts a plurality of shallow grooves formed into a substantially parallelogram provided in the circumferential direction and entirely extending in the circumferential direction. It should be noted that although it is preferable to form the grooves into the arrow shape towards a direction of rotation of the tire because a direction of mounting of the tire is easily recognizable, the shape does not necessarily have to be the one as in FIG. 2(g), and arrow-shaped shallow grooves may be added to the linear shallow groove depicted in FIG. 2(a).

In the tire depicted in FIG. 1, there are provided two circumferential shallow grooves 11a in the center region Tc and two circumferential shallow grooves 11a in the shoulder regions Ts, four in total. However, the number of the circumferential shallow grooves 11a is not limited thereto. The number of the circumferential shallow grooves 11a may be larger in the center region Tc than the shoulder regions Ts of the tread portion 10 or may be larger in the shoulder regions Ts than the center region Tc. When the number of the circumferential shallow grooves 11a in the center region Tc is larger, drainage performance, particularly, during straight traveling is further improved, so that grip performance on a wet road surface can be improved. On the other hand, providing a larger number of the circumferential shallow grooves 11a in the shoulder regions Ts facilitates movement of rubber of the shoulder regions Ts during contact with the ground, particularly during turning, whereby heat generation is further promoted, so that grip performance can be exhibited earlier. Furthermore, since the shoulder regions Ts have less opportunity to contact with the ground than the center region Tc, providing the shallow grooves in the shoulder regions Ts can provide the effect of improving the grip performance of the shoulder regions Ts, and also can improve drainage performance during turning.

Furthermore, the depth of the circumferential shallow grooves 11a may be deeper in the center region Tc than in the shoulder regions Ts of the tread portion 10, or may be deeper in the shoulder regions Ts than in the center region Tc. This is, as is expected, because making the depth of the circumferential shallow grooves 11a in the center region Tc deeper further improves drainage performance particularly during straight traveling, so that grip performance on a wet road surface can be improved, whereas making the depth of the circumferential shallow grooves 11a in the shoulder regions Ts deeper facilitates movement of the rubber of the shoulder regions Ts during contact with the ground, particularly during turning, whereby heat generation is promoted, so that grip performance can be exhibited earlier. For the same reason, the width of the circumferential shallow grooves 11a may be wider in the center region Tc than in the shoulder regions Ts of the tread portion 10, or may be wider in the shoulder regions Ts than in the center region Tc. Note that the depth of the circumferential shallow grooves 11a does not have to be constant and may be changed in the direction of extension thereof.

Still furthermore, intervals between the circumferential shallow grooves 11a, that is, L1 and L2 in the illustrated example are preferably from 10 to 100 mm. Herein, the intervals between the circumferential shallow grooves 11a refer to lengths of a surface of the tread portion under normal inner pressure and no-load conditions. When the intervals between the circumferential shallow grooves 11a are less than 10 mm, the rigidity of the tread portion 10 is reduced, which may deteriorate steering stability. Additionally, since the area of the circumferential shallow grooves 11a with respect to the entire ground-contacting surface is increased, grip performance can be reduced. On the other hand, when the intervals between the circumferential shallow grooves 11a are more than 100 mm, drainage performance is deteriorated, and also easy movement of the tread portion 10 is hindered, so that the effects of the invention may not be sufficiently obtained. It should be noted that an interval between intervals in a case of shallow grooves having a zigzag shape or the like is a distance between center positions of deflection widths of the shallow grooves.

Additionally, the circumferential shallow grooves 11a may have an angle in a range of ±45° with respect to the tire equator E. In this case, all of the circumferential shallow grooves 11a may extend to a tread end and open at the tread end, or only some of the circumferential shallow grooves 11a may open at the tread end. By providing such a configuration, favorable initial drainage performance can be obtained. In this case, the angle of the circumferential shallow grooves 11a is preferably provided so as to be perpendicular to an input direction from the viewpoint of increasing edge components. It should be noted that some or all of the circumferential shallow grooves 11a may terminate at about 20 mm in front of the tread end.

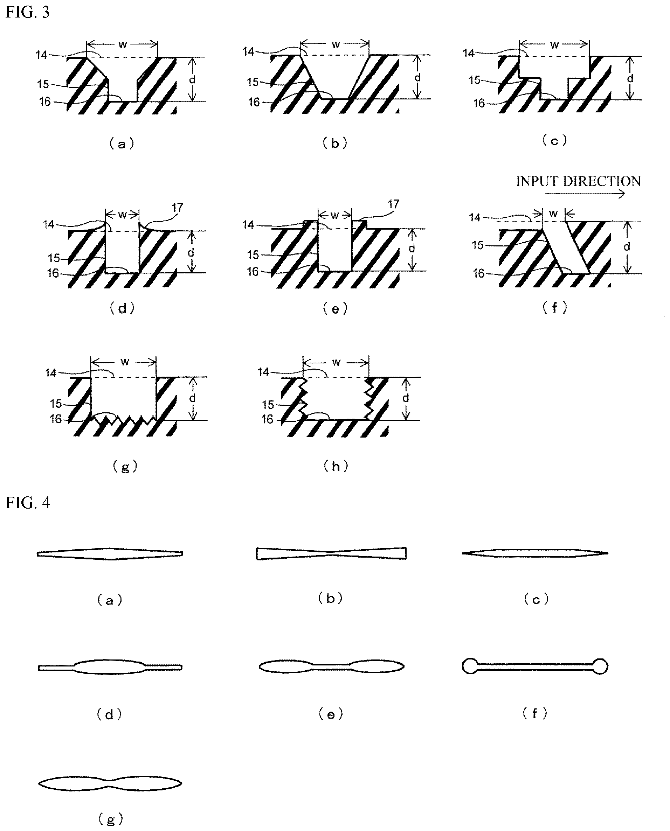

Furthermore, FIGS. 3 are schematic cross-sectional views illustrating examples of a cross-sectional shape in a shallow groove widthwise direction of the circumferential shallow grooves according to one preferable embodiment of the pneumatic tire for a motorcycle of the invention. In the tire of the invention, the cross-sectional shape may be different from a virtual cross-sectional shape including a contour line 14 of the tread portion 10, a pair of groove walls 15 substantially perpendicular to the contour line 14, and a groove bottom 16 substantially parallel to the contour line 14 and connecting the pair of groove walls 15. Herein, the groove walls 15 may be connected to the groove bottom 16 perpendicularly or in a curved manner. In other words, the cross-sectional shape of the circumferential shallow grooves 11a may be different from an ordinary shape, and at least a part of the pair of groove walls 15 may have a tapered shape, a shape narrowed stepwise in a depthwise direction (a tire radial direction) of the circumferential shallow grooves 1 1a, or the like. Additionally, a protruded portion 17 protruding radially outward may be formed at opening edges of the circumferential shallow grooves 11a of the tread portion 10. Furthermore, on the groove walls 15 or the groove bottom 16 may be formed recesses and protrusions extending in the direction of extension of the circumferential shallow grooves 11a.

In FIG. 3(a), only parts of the groove walls 15 near the opening portion have a tapered shape, and in FIG. 3(b), the entire groove walls 15 have a tapered shape. By forming the opening portion of the circumferential shallow grooves 11a into a tapered shape in these manners, drainage performance can be made more favorable without losing an edge effect. Additionally, in the shape of FIG. 3(c), the width of the circumferential shallow grooves 11a is narrowed stepwise in the groove depthwise direction. Such a shape enables the degree of wear of the tread portion 10 to be determined stepwise. Furthermore, in the shapes of FIGS. 3(d) and 3(e), the protruded portion 17 is provided at the opening edges of the circumferential shallow grooves 11a. In the shape of FIG. 3(d), the protruded portion 17 is gradually swollen as it comes closer to the opening edges of the circumferential shallow groove 11a, and in the shape of FIG. 3(e), the opening edges of the circumferential shallow groove 11a are substantially vertically swollen. By providing the projected portion 17 at the opening edges of the circumferential shallow grooves 11a in these manners, ground-contact pressure at ends of the circumferential shallow grooves 11a becomes large, so that a more favorable edge effect can be expected. Additionally, an advantageous effect of improving visibility can also be obtained. It should be noted that, in this case, a height of the protruded portion 17 is made lower than the depth of the circumferential shallow grooves 11a. Still furthermore, in the shape of FIG. 3(f), the groove wall 15 on a front side with respect to the input direction is lower, while the groove wall 15 on a rear side with respect thereto is higher. By providing a level difference between the groove walls 15 in this manner, a favorable edge effect can be obtained. Additionally, in the shapes of FIGS. 3(g) and 3(h), recesses and protrusions are provided on the groove bottom 16 and the groove walls 15, respectively. By further providing the grooves inside the circumferential shallow grooves 11a in these manners, visibility of the circumferential shallow grooves 11a is improved. In addition, when the recesses and protrusions are provided on the groove bottom 16, the recesses and protrusions of the groove bottom 16 appear after the circumferential shallow grooves 11a are worn, which is therefore excellent in designability. It should be noted that when the circumferential shallow grooves 11a have a tapered cross-sectional shape or when the groove walls 15 or the groove bottom 16 is provided with recesses and protrusions extending in the direction of extension of the circumferential shallow grooves 11a, a reference for the depth of the circumferential shallow grooves 11a is the contour line 14 of the virtual cross-sectional shape, and also, a reference for the width of the circumferential shallow grooves 11a is the width of the opening portion of the virtual cross-sectional shape.

Still furthermore, in the tire of the invention, the widths of the shallow grooves 11 (the circumferential shallow grooves 11a and the widthwise shallow grooves) are changed in the directions of extension. For example, the widths thereof may be different at widthwise positions on the tread portion 10. Appropriately adjusting the widths of the shallow grooves 11 in this manner enables adjustment of drainage performance, as well as adjusting the rigidity of the tread portion 10 enables adjustment of grip performance. In the tire of the invention, the shapes of the shallow grooves 11 are not particularly limited.

FIGS. 4 depict schematic plan views illustrating examples of a change in width in the directions of extension of the shallow grooves according to the pneumatic tire for a motorcycle according to one preferable embodiment of the invention. In the tire of the invention, the shapes of the shallow grooves are not limited thereto. FIG. 4(a) depicts a shallow groove whose groove width is widest at a middle part thereof and becomes linearly narrower as closer to shallow-groove both side ends; FIG. 4(b) depicts a shallow groove whose groove width is narrowest at a middle part thereof and becomes linearly wider as closer to the shallow-groove both side ends; and FIG. 4(c) depicts a shallow groove whose shallow-groove both side ends become gradually narrower. Additionally, FIG. 4(d) is a shallow groove whose middle part is elliptic and whose both side ends are linear; FIG. 4(e) is a shallow groove whose middle part is linear and whose both side ends are elliptic; and FIG. 4(f) is a shallow groove whose middle part is linear and whose both ends are substantially perfect circular. FIG. 4(g) depicts a shallow groove in which two elliptic shallow grooves are arranged side by side. As in FIGS. 4(e), 4(f), and 4(g), providing no part forming an acute angle at both ends thereof leads to prevention of cracks. It should be noted that the middle part refers to a middle part of the shallow groove cut into three equal parts in the direction of extension.

Widening the center region Tc side of the shallow grooves 11 further improves drainage performance, so that grip performance on a wet road surface can be improved. On the other hand, widening the shoulder region Ts sides of the shallow grooves 11 facilitates movement of rubber of the shoulder regions Ts during contact with the ground, whereby heat generation is further promoted, so that grip performance during turning can be improved, and also drainage performance during turning can be improved.

In the tire of the invention, the circumferential shallow grooves 11a may be provided with a decorative pattern called serration in which a plurality of ridges is arranged at a predetermined pitch. Additionally, on the tread portion 10, for example, information and decorative patterns, such as characters, symbols, or figures of a manufacturer's name and the like, and a pattern by which a use state of a camber angle can be seen, may be provided by shallow grooves. Still furthermore, when providing circumferential shallow grooves and circumferentially inclined widthwise shallow grooves, the grooves may be formed into arrow shapes and used as rotation marks.

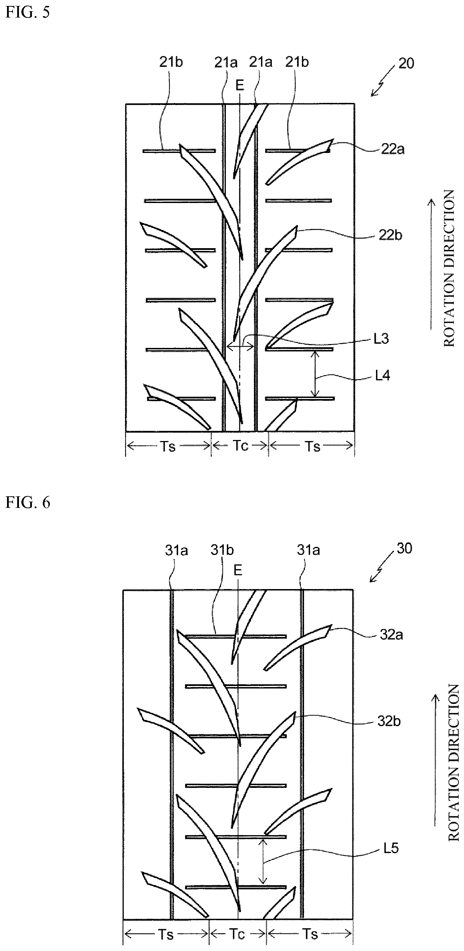

Next, FIG. 5 depicts a schematically developed view of a tread portion of a pneumatic tire for a motorcycle according to another form, which is not according to the present invention, but which is useful for understanding the present invention. An arrow in the drawing indicates a rotation direction, and the tire will contact with the ground from an arrow-side leading end thereof during traveling. The tire according to the present embodiment includes a tread portion 20 formed into a ring shape, and the tread portion 20 is provided with circumferential shallow grooves 21a and widthwise shallow grooves 21b. In the illustrated example, there are two circumferential shallow grooves 21a in the center region Tc, and each one column of widthwise shallow grooves 21b in both shoulder regions Ts. In the illustrated example, two kinds of main grooves 22a and 22b are periodically provided at an equal pitch. However, the shapes of the main grooves 22 are not particularly limited, and not limited to the above example. For example, circumferential grooves formed continuously in the circumferential direction may be provided as main grooves.

In addition, FIG. 6 depicts a schematically developed view of a tread portion of a pneumatic tire for a motorcycle according to still another form, which is not according to the present invention, but which is useful for understanding the present invention. In the illustrated example, there is provided a tread portion 30 formed into a ring shape, in which circumferential shallow grooves 31a are arranged only in the shoulder regions Ts, and widthwise shallow grooves 3 1b are provided from the center region Tc to parts of the shoulder regions Ts. Similarly to FIG. 5, two kinds of main grooves 32a and 32b are periodically provided at an equal pitch, but the shapes of the main grooves 32 are not particularly limited, and not limited to the above example. For example, as main grooves, circumferential grooves formed continuously in the circumferential direction may be provided.

In the tire according to the present embodiment, in either the center region Tc or the shoulder regions Ts, one of a total length of contour lines of the circumferential shallow grooves or a total length of contour lines of the widthwise shallow grooves is preferably longer than the other. For example, in the center region Tc, the total length of the contour lines of the circumferential shallow grooves may be longer than the total length of the contour lines of the widthwise shallow grooves, or in the center region Tc, the total length of the contour lines of the widthwise shallow grooves may be longer than the total length of the contour lines of the circumferential shallow grooves.

In the example depicted in FIG. 5, the circumferential shallow grooves 21a are arranged only in the center region Tc, and the widthwise shallow grooves 21b are arranged from the shoulder regions Ts to parts of the center region Tc. Due to this, in the center region Tc, the total length of contour lines of the circumferential shallow grooves 21a is longer than the total length of contour lines of the widthwise shallow grooves 21b. By arranging the circumferential shallow grooves 21a mainly in the center region Tc in this manner, drainage performance can be favorably improved. On the other hand, in the example depicted in FIG. 6, in the center region Tc, the total length of contour lines of the widthwise shallow grooves 3 1b is longer than the total length of contour lines of the circumferential shallow grooves 31a. By arranging the widthwise shallow grooves 31b mainly in the center region Tc in this manner, traction performance can be favorably improved.

Even in the tire according to the present embodiment, all of the circumferential shallow grooves and the widthwise shallow grooves having an angle with respect to the circumferential direction may extend to the tread end and may be open at the tread end, or only some of the shallow grooves 21 and 31 may be open at the tread end. By providing such a configuration, favorable initial drainage performance can be obtained. Angles of the shallow grooves 21 and 31 are preferably provided so as to be perpendicular to the input direction from the viewpoint of increasing edge components. Additionally, some or all of the shallow grooves may terminate at about 20 mm in front of the tread end.

It should be noted that, in the present embodiment, the widths, depths, shapes, cross-sectional shapes, and the like of the circumferential shallow grooves 21a, 31a and the widthwise shallow grooves 21b, 31b and the effects thereof are the same as those of the circumferential shallow grooves of the tire according to the one preferable embodiment described above.

In the tire according to the present embodiment, intervals between the substantially parallel shallow grooves 21, 31 (the circumferential shallow grooves 21a, 31a and the widthwise shallow grooves 21b, 31b), that is, L3, L4, and L5 in the illustrated examples are preferably from 10 to 100 mm. Herein, the intervals between the shallow grooves 21, 31 refer to lengths of the surface of the tread portion under normal inner pressure and no-load conditions. When the intervals between the shallow grooves 21, 31 are less than 10 mm, rigidity of the tread portions 20 and 30 is reduced, which may deteriorate steering stability. Additionally, since areas of the shallow grooves 21, 31 with respect to an entire ground-contact surface become large, grip performance may be reduced. On the other hand, when the intervals between the shallow grooves 21, 31 are more than 100 mm, drainage performance and traction performance are deteriorated, and also easy movement of the tread portion 20, 30 is hindered, so that the effects of the invention may not be sufficiently obtained. Note that an interval between intervals in a case of shallow grooves having a zigzag shape or the like is a distance between center positions of deflection widths of the shallow grooves.

Additionally, the depths of the shallow grooves 21, 31 (circumferential shallow grooves 21a, 31a and the widthwise shallow grooves 21b, 31b) may be changed in the directions of extension, similarly to the circumferential shallow grooves of the tire according to the one form described above. For example, the depths thereof may be different at positions in the directions of extension on the tread portion 20, 30. Appropriately adjusting the depths of the shallow grooves 21, 31 in this manner enables adjustment of drainage performance, as well as adjusting rigidity of the tread portion 20, 30 enables adjustment of grip performance.

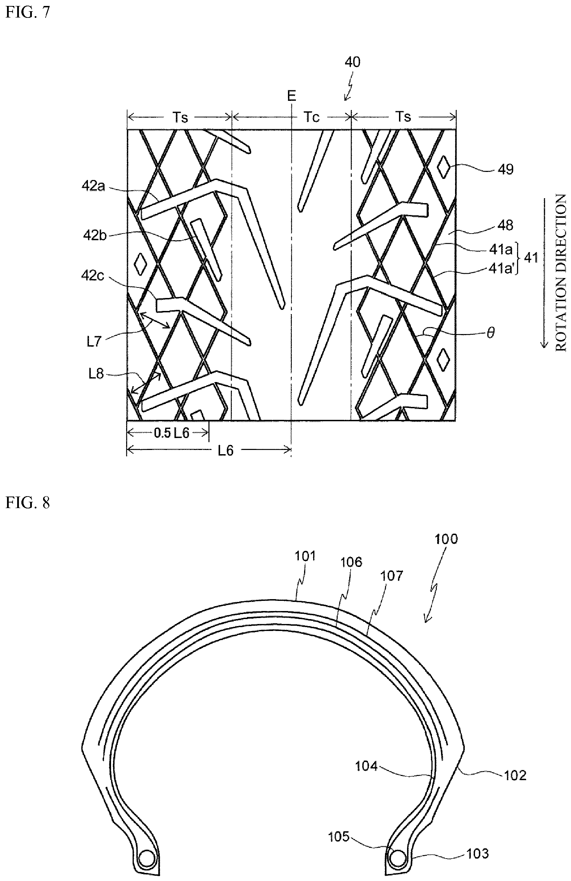

Next, FIG. 7 depicts a schematically developed view of a tread portion of a pneumatic tire for a motorcycle according to still another form, which is not according to the present invention, but which is useful for understanding the present invention. An arrow in the drawing indicates a rotation direction, and the tire will contact with the ground from an arrow-side leading end thereof during traveling.

A motorcycle turns by tilting the vehicle body with respect to a road surface. Due to that, a ground contact region of the tread portion is different between during straight traveling and during cornering. During straight traveling, the center region of the tread portion will contact with the road surface, while during cornering, the shoulder regions of the tread portion will contact therewith. Thus, pneumatic tires for a motorcycle in which the ground contact region is different between during straight traveling and during cornering require favorable drainage performance and excellent grip performance when transitioning from straight traveling to cornering on a wet road surface.

Regarding such a technique, for example, there is mentioned Japanese Unexamined Patent Application Publication No. 2009-101722. A pneumatic tire for motorcycles disclosed in the Japanese Unexamined Patent Application Publication No. 2009-101722 is formed by a tread center region including a tire equator surface, tread end regions forming tread end sides, and tread middle regions forming portions between the tread center region and the tread end regions. The tread center region and the tread end regions are slick portions in which no grooves are formed. In the tread middle regions, there is arranged a block column in which rug grooves intersecting with a tire circumferential direction U are formed.

Typically, the tread rubber of a tire is designed so as to enable it to exhibit a maximum performance at a predetermined temperature or more. However, in the case of motorcycles, straight traveling time accounts for most of normal traveling, which can cause shortage of heat generation by friction on the shoulder regions used during cornering. Due to this, there is a concern about insufficient gripping during cornering when atmospheric temperature is low. Such a concern becomes more noticeable under wet conditions.

Thus, the tire according to the present embodiment includes a tread portion 40 formed into a ring shape. When a ground contact region of the tread portion 40 during straight running is defined as a center region Tc, and both outer sides of the center region Tc in a tire width direction are defined as shoulder regions Ts, at least two kinds of shallow grooves 41 having a width of 0.1 to 2.0 mm and a depth of 0.1 to 2.0 mm and extending in different directions are provided in plurality in at least the shoulder regions Ts, and preferably, in the shoulder regions Ts. In the present embodiment, at least one kind thereof are circumferential shallow grooves.

In the illustrated example, the shallow grooves 41 include two kinds of circumferential shallow grooves that are shallow grooves 41a extending from a preceding ground contact side in the rotation direction to the tire widthwise outer sides and shallow grooves 41a' extending from the preceding ground contact side in the rotation direction to tire widthwise inner sides. Additionally, in the illustrated example, the shallow grooves 41 are of a straight linear shape, but may be of a substantially straight linear shape with large radius of curvature or a shape other than these. Note that, in the illustrated example, although three kinds of main grooves 42a, 42b, and 42c larger in groove width and groove depth than the shallow grooves 41 are periodically provided at an equal pitch, the shapes of the main grooves 42 in the tire of the illustrated example are not particularly limited thereto. For example, circumferential grooves formed continuously in the circumferential direction may be provided as main grooves.

In the tire according to the present embodiment, at least some of the shallow grooves 41 intersect with each other, thereby forming land portions 48 partitioned by the shallow grooves 41. The land portions 48 provided by the intersection between the shallow grooves 41 are small in area and thus easily move during contact with the ground, whereby heat generation is promoted, which enables grip performance of the shoulder regions Ts to be exhibited early. Additionally, the shallow grooves 41 can also improve appearance. Furthermore, in the case of a new tire, silicone used in a tire vulcanization step is on the surface layer thereof, and makes the tire slippery when it is new. Thus, to fully exhibit the performance of the tire, it is necessary to allow the surface layer of the tread portion 40 to be worn to some degree. In the tire according to the present embodiment, providing the shallow grooves 41 in the shoulder regions Ts facilitates wear of the shoulder regions Ts, so that the performance of a new tire can be exhibited early.

Additionally, in the tire according to the present embodiment, some of the shallow grooves 41 extend to tread end to form an opening. Thus, initial drainage performance can be improved by the shallow grooves 41, thereby enabling grip performance on a wet road surface to be improved. In the tire according to the present embodiment, when a distance along a surface of the tread portion 40 ranging from a tire equator E to the tread end is defined as L6, the shallow grooves 41 are preferably provided in at least a region of 0.5L6 from the tread end. Thereby, the effects of the invention can be favorably obtained. Herein, the distance L6 is a value measured in a state where the tire is mounted to a specified rim, filled with a specified inner pressure, and is under no load.

Even in the tire according to the present embodiment, the width of the shallow grooves 41 is from 0.1 to 2.0 mm, and preferably from 0.5 to 1.5 mm. When the width of the shallow grooves 41 is less than 0.1 mm, sufficient drainage performance may not be obtained. On the other hand, when the width thereof exceeds 2.0 mm, rigidity of the land portions 48 is reduced, whereby steering stability is deteriorated and ground-contact area becomes small, so that sufficient grip may not be obtained. Additionally, the depth of the shallow grooves 41 is from 0.1 to 2.0 mm, and preferably from 0.2 to 0.5 mm. When the depth of the shallow grooves 41 is less than 0.1 mm, drainage performance may not be sufficiently obtained. On the other hand, when the depth thereof exceeds 2.0 mm, rigidity of the land portions 48 is likewise reduced, which may deteriorate steering stability. Furthermore, even in the present embodiment, the shape of the shallow grooves, the width of the shallow grooves, and the like are as above described.

In the tire according to the present embodiment, all of the shallow grooves 41 may be inclined with respect to the tire circumferential direction and the tire width direction, as illustrated. Particularly, the shallow grooves 41 are preferably inclined such that an angle *θ* formed between the intersecting shallow grooves 41 is from 5 to 80°. When the angle between the shallow grooves 41 is less than 5°, the land portions 48 near positions of intersection between the shallow grooves 41 become thin and thereby chipping occurs in the land portions 48, which is not preferable. On the other hand, by setting the angle *θ* to 80° or less, the effects of the invention can be favorably obtained.

In the tire according to the present embodiment, the shallow grooves 41 are preferably formed into a lattice shape. In the illustrated example, two kinds of shallow grooves 41 extending in different directions form substantially rhombus shapes. By forming the shallow grooves 41 into the lattice shape, areas of the land portions 48 partitioned by the shallow grooves 41 become substantially equal, so that heat generation and drainage performance of the land portions 48 during contact of the tire with the ground can be equalized. The shallow grooves 41 facing each other to form a lattice are preferably parallel with each other, but do not necessarily have to be parallel as long as deviation is 5° or less.

Furthermore, in the tire according to the present embodiment, intervals between the shallow grooves 41 extending in the same direction, that is, L7 and L8 in the illustrated example are preferably from 10 to 100 mm. When the intervals between the shallow grooves 41 are less than 10 mm, rigidity of the land portions 48 is reduced, whereby steering stability may be deteriorated. Additionally, since an area of the shallow grooves 41 with respect to the entire ground-contact surface becomes large, grip performance may be reduced. On the other hand, when the intervals between the shallow grooves 41 are more than 100 mm, drainage performance is deteriorated, and also easy movement of the land portions 48 is hindered, so that the effects of the invention may not be sufficiently obtained.

Still furthermore, in the tire according to the present embodiment, an auxiliary groove 49 is preferably provided in at least some of the land portions 48 partitioned by the tread end and the shallow grooves 41. Thereby, appearance can be improved, as well as rigidity of widthwise outermost land portions 48 having less ground-contact frequency is reduced, which enables improvement of grip performance. The auxiliary groove 49 can be appropriately designed according to a tread pattern. Preferred is one that is shallower than a maximum depth of the main grooves 42 and deeper than a maximum depth of the shallow grooves 41. However, when a ratio of the area of the auxiliary grooves 49 to the area of the land portions 48 partitioned by the tread end and the shallow grooves 41 becomes large, the rigidity of the land portions 48 is reduced more than necessary, which may cause a problem such as chipping. Thus, in the tire of the invention, the ratio of the area of the auxiliary grooves 49 to the area of the land portions 48 is preferably about from 5 to 40%. Additionally, the auxiliary grooves 49 are preferably arranged at a pitch such that two or more auxiliary grooves are not included within the same ground-contact surface, and for example, can be arranged in every other one, every third one, or the like of the land portions 48 partitioned by the tread end and the shallow grooves 41. It should be noted that, in the illustrated example, the auxiliary grooves 49 are of a substantially rhombus shape and closed in the land portions, but the shape thereof is not particularly limited, and may be of another shape such as circular.

In the tire according to the present embodiment, all of the shallow grooves 41 may be open at the tread end. However, as described above, at least some thereof may be open at the tread end. In the illustrated example, among the shallow grooves 41 extending in the tire width direction, the shallow grooves 41a' extending from the preceding ground contact side in the rotation direction to the tire widthwise inner sides terminate at points intersecting with the shallow grooves 41a. In other words, on the preceding ground contact side in the rotation direction, the tread ends and the shallow grooves 41a' are adapted not to form any land portion having acute-angled vertices. Providing such a configuration can prevent a land portion having acute-angled vertices and being small in area from being formed near the tread ends. Such a small land portion is likely to cause a problem such as chipping, which is therefore not preferable. Accordingly, as illustrated, the shallow grooves 41a' extending to the tire widthwise inner sides are preferably not provided.

In the tire of the invention, it is only important that the shallow grooves 11, 21, 31, 41 formed on the tread portion 10, 20, 30, 40 satisfy the above requirements, and there are no other particular limitations. For other configurations, already known structures can be employed. For example, as illustrated, when providing the main shallow grooves 12, 22, 32, 42, the widths and depths of the main shallow grooves 12, 22, 32, 42 can be any size as long as they are larger than the widths and depths of the shallow grooves 11, 21, 31, 41. Furthermore, configurations other than that of the tread portion 10, 20, 30, 40 are also not particularly limited, and already known structures can be employed. FIG. 8 depicts a schematic cross-sectional view in a widthwise direction of a pneumatic tire for a motorcycle according to one preferable embodiment of the invention.

A tire 100 of the invention illustrated includes a tread portion 101, a pair of sidewall portions 102 continuing to both sides of the tread portion 101, a pair of bead portions 103 each continuing to the pair of sidewall portions 102, and a carcass 104 including a carcass ply having at least one layer (one layer in the illustrated example) that reinforces these respective portions between the bead portions 103. In the illustrated example, ends of the carcass 104 are folded back from a tire inner side to a tire outside to be engaged with a bead core 105, but may be engaged by sandwiching with a bead wire from both sides.

Additionally, in the illustrated tire, a belt layer 106 is provided on a tire radial outer side of the carcass 104. A belt cord of the belt layer 106 is also not particularly limited, and an already known inextensible and highly elastic cord can be used, for example, by appropriately selecting from those made of any material, such as an organic fiber such as aromatic polyamide (aramid, for example, trade name: KEVLAR, manufactured by DuPont Co., Ltd.), polyethylene naphthalate (PEN), polyethylene terephthalate (PET), rayon, or nylon, steel, a glass fiber, or a carbon fiber. The belt may be one made of two or more inclined belt layers arranged such that cord directions intersect with each other between the layers or may be one made of one or more spiral belt layers whose cord direction is substantially a tire circumferential direction. In FIG. 8, a spiral belt layer 107 is provided on the tire radial outer side of the belt layer 106.

The tire of the invention can be applied to both the front tire and the rear tire of a motorcycle, and additionally can be applied to both radial structure tires and bias structure tires.

### EXAMPLES

Hereinafter, the present invention will be described in more detail by using Examples.

### <Example 1>

A pneumatic tire for a motorcycle, which is not according to the present invention, having the tread pattern depicted in FIG. 1 was manufactured with tire size: 120/70 ZR17M/C. By setting the depth of the shallow grooves to 0.3 mm, the width of the shallow grooves to 1.0 mm, and the angle of the circumferential shallow grooves to substantially 0° with respect to a circumferential direction, there were formed continuous grooves constant in groove width and groove depth. The cross-sectional shape of the shallow grooves includes a pair of groove walls extending perpendicularly from the surface of the tread portion and a groove bottom connecting the groove walls and substantially parallel to the surface of the tread portion. The intervals L1 and L2 between the shallow grooves were set to 10 mm and 30 mm.

### <Comparative Example 1>

A tire of Comparative Example was manufactured in the same manner as the tire of the Example, except that no shallow grooves were provided in the tread portion.

Using the obtained respective tires, grip performance was evaluated according to the following procedure. Results are shown together in Table 1.

### <Grip Performance>

Evaluation was performed by causing vehicles installed with the respective tires to travel on a wet road surface. Grip performance was evaluated by driver's feeling. At that time, an evaluation of the tire of Comparative Example 1 was regarded as 100, and an evaluation of the tire of the Example was indexed.

**[Table 1]**

| | Comparative Example 1 | Example 1 |
|---|---|---|
| Shallow groove width (mm) | - | 1.0 |
| Shallow groove depth (mm) | - | 0.3 |
| Groove interval L1/L2 (mm) | - | 10/30 |
| Grip performance (index) | 100 | 110 |

Table 1 indicates that the tire of Example 1 in which the predetermined shallow grooves are provided in the tread portion is excellent in grip performance.

### <Example 2-1>

A pneumatic tire for a motorcycle having the tread pattern depicted in FIG. 6 was manufactured with tire size: 120/70 ZR17M/C. The depth of the shallow grooves: the circumferential shallow grooves and the widthwise shallow grooves was set to 0.3 mm, and the pattern of the widthwise shallow grooves was the same as that in FIG. 4(a), in which the width of the pattern was 2.0 mm at a widest part and 1.0 mm at a narrowest part. Additionally, an angle of the widthwise shallow grooves with respect to the tire width direction was set to be perpendicular to the tire equator, and the interval L5 between the widthwise shallow grooves was set to 24 mm.

### <Example 2-2>

A pneumatic tire for a motorcycle having the tread pattern depicted in FIG. 6 was manufactured with tire size: 120/70 ZR17M/C. The depth of the shallow grooves: of the circumferential shallow grooves and the widthwise shallow grooves was set to 0.3 mm, and the pattern of the widthwise shallow grooves was the same as that in FIG. 4(b), in which the width of the pattern was 2.0 mm at a widest part and 1.0 mm at a narrowest part. Additionally, an angle of the widthwise shallow grooves with respect to the tire width direction was set to be perpendicular to the tire equator, and the interval L5 between the widthwise shallow grooves was set to 24 mm.

### <Comparative Example 2>

A tire of Comparative Example 2 was manufactured in the same manner as the tire of the Example, except that no shallow grooves were provided in the tread portion.

Using the obtained respective tires, grip performance and traction performance were evaluated according to the following procedure.

### <Grip Performance>

Evaluation was performed by causing vehicles installed with the respective tires to travel on a wet road surface. Grip performance was evaluated by driver's feeling. In that case, an evaluation of the tire of Comparative Example 2 was regarded as 100, and evaluations of the tires of Examples 2-1 and 2-2 were indexed.

### <Traction Performance>

Traction performance was evaluated by driver's feeling. In that case, an evaluation of the tire of Comparative Example 2 was regarded as 100, and evaluations of the tires of Examples 2-1 and 2-2 were indexed.

**[Table 2]**

| | Comparative Example 2 | Example 2-1 | Example 2-2 |
|---|---|---|---|
| Shallow groove shape | - | FIG. 4(a) | FIG. 4(b) |
| Shallow groove width (widest part/narrowest part: mm) | - | 2/1 | 2/1 |
| Shallow groove depth (mm) | - | 0.3 | 0.3 |
| Shallow groove angle (°) | - | 0 | 0 |
| Groove interval (mm) | - | 24 | 24 |
| Grip performance (index) | 100 | 110 | 120 |
| Traction performance (index) | 100 | 120 | 110 |

Table 2 indicates that the tire of the invention in which the predetermined shallow grooves are provided in the tread portion is excellent in grip performance and traction performance.

### <Example 3-1>

A pneumatic tire for a motorcycle, which is not according to the present invention, having the tread pattern depicted in FIG. 5 was manufactured with tire size: 120/70

ZR17M/C. The depth of the shallow grooves was set to 0.3 mm, and the width of the shallow grooves was set to 1.0 mm. Total lengths of the contour lines of the center region and the shoulder regions are as shown in Table 3. Additionally, the intervals L3 and L4 were set to 30 and 40 mm, respectively.

### <Example 3-2>

A pneumatic tire for a motorcycle, which is not according to the present invention, having the tread pattern depicted in FIG. 6 was manufactured with tire size: 150/80 B16M/C. The depth of the shallow grooves was set to 0.3 mm, and the width of the shallow grooves was set to 1.0 mm. Total lengths of the contour lines of the center region and the shoulder regions are as shown in Table 3. Additionally, the interval L5 between the shallow grooves was set to 40 mm.

### <Comparative Example 3>

A tire of Comparative Example 3 was manufactured in the same manner as the tire of the Example, except that no shallow grooves were provided in the tread portion.

Using the obtained respective tires, grip performance and traction performance were evaluated according to the following procedure. Results are shown together in Table 3.

### <Grip Performance>

Evaluation was performed by causing vehicles installed with the respective tires to travel on a wet road surface. Grip performance was evaluated by driver's feeling. In that case, an evaluation of the tire of Comparative Example 3 was regarded as 100, and evaluations of the tires of Examples 3-1 and 3-2 were indexed.

### <Traction Performance>

Traction performance was evaluated by driver's feeling. In that case, an evaluation of the tire of Comparative Example 3 was regarded as 100, and evaluations of the tires of Examples 3-1 and 3-2 were indexed.

**[Table 3]**

| | | Comparative Example 3 | Example 3-1 | Example 3-2 |
|---|---|---|---|---|
| Tread pattern | | - | FIG. 5 | FIG. 6 |
| Shallow groove width (mm) | | - | 1.0 | 1.0 |
| Shallow groove depth (mm) | | - | 0.3 | 0.3 |
| Circumferential shallow groove angle (°) | | - | 0 | 0 |
| Widthwise shallow groove angle (°) | | - | 90 | 90 |
| Total of contour lines of circumferential shallow grooves (mm) | Center region | - | 3800 | 0 |
| | Shoulder regions | - | 0 | 3800 |
| Total of contour lines of widthwise shallow grooves (mm) | Center region | - | 200 | 3000 |
| | Shoulder regions | - | 3000 | 200 |
| Grip performance (index) | | 100 | 120 | 110 |
| Traction performance (index) | | 100 | 110 | 120 |

Table 3 indicates that the tire of Examples 3-1 and 3-2 in which the predetermined shallow grooves are provided in the tread portion is excellent in grip performance and traction performance.

### <Examples 4-1 and 4-2>

A pneumatic tire for a motorcycle, which is not according to the present invention, having the tread pattern depicted in FIG. 7 was manufactured with tire size: 150/80 B16M/C. The depth of the circumferential shallow grooves 41a and 41a' was set to 0.3 mm, and the width thereof was set to 1.0 mm. The intervals L7 and L8 between the circumferential shallow grooves were set to 24 mm, the circumferential shallow grooves were angled at 25° and -25°, respectively, with respect to the circumferential direction, and the angle *θ* between the circumferential shallow grooves 41a and 41a' was 50°. Additionally, a ratio of the auxiliary grooves to the land portions was set to 12.5%. In Example 4-2, which is not according to the present invention, the respective conditions were changed as shown in Table 4 below to manufacture a tire.

### <Comparative Example 4>

A tire of Comparative Example 4 was manufactured in the same manner as Example 4-1, except that no shallow grooves were provided in the shoulder regions.

Using the obtained respective tires, grip performance was evaluated according to the following procedure.

### <Grip Performance>

Evaluation was performed by causing vehicles installed with the respective tires to travel on a wet road surface. Grip performance was evaluated by driver's feeling. In that case, an evaluation of the tire of Comparative Example 4 was regarded as 100, and evaluations of the tires of Examples 4-1 and 4-2 were indexed.

**[Table 4]**

| | Comparative Example 4 | Example 4-1 | Example 4-2 |
|---|---|---|---|
| Shallow groove depth (mm) | - | 0.3 | 0.3 |
| Shallow groove width (mm) | - | 1.0 | 1.0 |
| Shallow groove angle (°) | - | 50 | 50 |
| Groove interval (mm) | - | 24 | 24 |
| Presence or absence of auxiliary grooves | Absence | Presence | Absence |
| Grip performance (index) | 100 | 105 | 103 |

Table 4 indicates that the tire of Examples 4-1 and 4-2 in which the predetermined shallow grooves are provided in the shoulder regions of the tread portion is excellent in drainage performance and grip performance.

### DESCRIPTION OF SYMBOLS

- 10, 20, 30, 40: Tread portion
- 11, 21, 31, 41: Shallow groove
- 12, 22, 32, 42: Main groove
- 14: Contour line
- 15: Groove wall
- 16: Groove bottom
- 17: Protruded portion
- 48: Land portion
- 49: Auxiliary groove
- 100: Pneumatic tire for a motorcycle (tire)
- 101: Tread portion
- 102: Sidewall portion
- 103: Bead portion
- 104: Carcass
- 105: Bead core
- 106: Belt layer
- 107: Spiral belt layer

## Claims

1. A pneumatic tire for a motorcycle comprising a tread portion (10, 20, 30, 40) formed into a ring shape, the tread portion (10, 20, 30, 40) being provided with circumferential shallow grooves (11a, 21a, 31a, 41a, 41a') formed by extending shallow grooves having a width of 0.1 to 2.0 mm and a depth of 0.1 to 2.0 mm in a tire circumferential direction,
wherein a width of the circumferential shallow grooves provided in the tread portion is changed in a direction of extension of the circumferential shallow grooves.

2. The pneumatic tire for a motorcycle according to claim 1, wherein the tread portion (20, 30) is further provided with widthwise shallow grooves (21b, 31b) formed by extending shallow grooves having a width of 0.1 to 2.0 mm and a depth of 0.1 to 2.0 mm in a tire width direction, and when a ground contact region of the tread portion (20, 30) during straight running is defined as a center region and both outer sides of the center region in a tire width direction are defined as shoulder regions, either one of a total length of contour lines of the circumferential shallow grooves (21a, 31a) or a total length of contour lines of the widthwise shallow grooves (21b, 3 1b) is longer than the other in either the center region or the shoulder regions.

3. The pneumatic tire for a motorcycle according to claim 1 or 2, wherein when a ground contact region of the tread portion (40) during straight running is defined as a center region and both outer sides of the center region in a tire width direction are defined as shoulder regions, at least two kinds of shallow grooves (41a, 41a') having a width of 0.1 to 2.0 mm and a depth of 0.1 to 2.0 mm and extending in different directions are provided in plurality in at least the shoulder regions, at least some of the shallow grooves (41a, 41a') intersecting, and at least some of the shallow grooves (41a) being open at a tread end.

4. The pneumatic tire for a motorcycle according to claim 2 or 3, wherein the number of the shallow grooves is larger in the center region than the shoulder regions of the tread portion.

5. The pneumatic tire for a motorcycle according to any one of claims 2 to 4, wherein the depth of the shallow grooves is deeper in the center region than the shoulder regions of the tread portion.

6. The pneumatic tire for a motorcycle according to any one of claims 2 to 5, wherein the width of the shallow grooves is wider in the center region than the shoulder regions of the tread portion.

7. The pneumatic tire for a motorcycle according to claim 2 or 3, wherein the number of the shallow grooves (41a, 41a') is larger in the shoulder regions than the center region of the tread portion (40).

8. The pneumatic tire for a motorcycle according to any one of claims 2 to 4, wherein the depth of the shallow grooves is deeper in the shoulder regions than the center region of the tread portion.

9. The pneumatic tire for a motorcycle according to any one of claims 2 to 5, wherein the width of the shallow grooves is wider in the shoulder regions than the center region of the tread portion.

10. The pneumatic tire for a motorcycle according to any one of claims 1 to 9, wherein the shallow grooves (11a, 21a, 31a, 41a, 41a') are continuous in the circumferential direction.

## Patentansprüche

1. Luftreifen für ein Motorrad, der einen Laufflächenabschnitt (10, 20, 30, 40) umfasst, der zu einer Ringgestalt geformt ist, wobei der Laufflächenabschnitt (10, 20, 30, 40) mit umlaufenden flachen Rillen (11a, 21a, 31a, 41a, 41a') versehen ist, die durch Ausdehnen von flachen Rillen, die eine Breite von 0,1 bis 2,0 mm und eine Tiefe von 0,1 bis 2,0 mm aufweisen, in einer Reifenumfangsrichtung gebildet werden,
wobei eine Breite der umlaufenden flachen Rillen, die in dem Laufflächenabschnitt bereitgestellt werden, in einer Ausdehnungsrichtung der umlaufenden flachen Rillen geändert wird.

2. Luftreifen für ein Motorrad nach Anspruch 1, wobei der Laufflächenabschnitt (20, 30) ferner mit quer laufenden flachen Rillen (21b, 31b) versehen ist, die durch Ausdehnen von flachen Rillen, die eine Breite von 0,1 bis 2,0 mm und eine Tiefe von 0,1 bis 2,0 mm aufweisen, in einer Reifenbreitenrichtung gebildet werden, und wenn ein Bodenberührungsbereich des Laufflächenabschnitts (20, 30) während des Geradeauslaufs als ein Mittenbereich definiert ist und die beiden äußeren Seiten des Mittenbereichs in einer Reifenbreitenrichtung als Schulterbereiche definiert sind, die eine von einer Gesamtlänge von Umrisslinien der umlaufenden flachen Rillen (21a, 31a) oder einer Gesamtlänge von Umrisslinien der quer laufenden flachen Rillen (21b, 31b) in entweder dem Mittenbereich oder den Schulterbereichen länger ist als die andere.

3. Luftreifen für ein Motorrad nach Anspruch 1 oder 2, wobei, wenn ein Bodenberührungsbereich des Laufflächenabschnitts (40) während des Geradeauslaufs als ein Mittenbereich definiert ist und die beiden äußeren Seiten des Mittenbereichs in einer Reifenbreitenrichtung als Schulterbereiche definiert sind, wenigstens zwei Arten von flachen Rillen (41a, 41a'), die eine Breite von 0,1 bis 2,0 mm und eine Tiefe von 0,1 bis 2,0 mm aufweisen und sich in unterschiedlichen Richtungen erstrecken, in einer Vielzahl in mindestens den Schulterbereichen bereitgestellt werden, wobei sich mindestens einige der flachen Rillen (41a, 41a') schneiden und mindestens einige der flachen Rillen (41a) an einem Laufflächenende offen sind.

4. Luftreifen für ein Motorrad nach Anspruch 2 oder 3, wobei die Anzahl der flachen Rillen in dem Mittenbereich größer ist als in den Schulterbereichen des Laufflächenabschnitts.

5. Luftreifen für ein Motorrad nach einem der Ansprüche 2 bis 4, wobei die Tiefe der flachen Rillen in dem Mittenbereich tiefer ist als in den Schulterbereichen des Laufflächenabschnitts.

6. Luftreifen für ein Motorrad nach einem der Ansprüche 2 bis 5, wobei die Breite der flachen Rillen in dem Mittenbereich breiter ist als in den Schulterbereichen des Laufflächenabschnitts.

7. Luftreifen für ein Motorrad nach Anspruch 2 oder 3, wobei die Anzahl der flachen Rillen (41a, 41a') in den Schulterbereichen größer ist als in dem Mittenbereich des Laufflächenabschnitts (40).

8. Luftreifen für ein Motorrad nach einem der Ansprüche 2 bis 4, wobei die Tiefe der flachen Rillen in den Schulterbereichen tiefer ist als in dem Mittenbereich des Laufflächenabschnitts.

9. Luftreifen für ein Motorrad nach einem der Ansprüche 2 bis 5, wobei die Breite der flachen Rillen in den Schulterbereichen breiter ist als in dem Mittenbereich des Laufflächenabschnitts.

10. Luftreifen für ein Motorrad nach einem der Ansprüche 1 bis 9, wobei die flachen Rillen (11a, 21a, 31a, 41a, 41a') in der Umfangsrichtung durchgehend sind.

## Revendications

1. Bandage pneumatique pour un motocycle, comprenant une partie de bande de roulement (10, 20, 30, 40) formée en une forme annulaire, la partie de bande de roulement (10, 20, 30, 40) comportant des rainures circonférentielles peu profondes (11a, 21a, 31a, 41a, 41a') formées en étendant des rainures peu profondes ayant une largeur comprise entre 0,1 et 2,0 mm et une profondeur comprise entre 0,1 et 2,0 mm dans une direction circonférentielle ;
dans lequel une largeur des rainures périphériques peu profondes disposées dans la partie de bande de roulement est changée dans une direction d'extension des rainures circonférentielles peu profondes.

2. Bandage pneumatique pour un motocycle selon la revendication 1, dans lequel la partie de bande de roulement (20 , 30) comporte en outre des rainures peu profondes (21b, 31b) dans le sens de la largeur formées en étendant des rainures peu profondes ayant une largeur comprise entre 0,1 et 2,0 mm et une profondeur comprise entre 0,1 et 2,0 mm dans une direction de la largeur du bandage pneumatique, et lorsqu'une région de contact au sol de la partie de bande de roulement (20, 30) au cours du roulement en ligne droite est définie comme une région centrale et lorsque les deux côtés externes de la région centrale, dans une direction de la largeur du bandage pneumatique, sont définis comme des régions d'épaulement, l'une d'une hauteur totale des lignes de contour des rainures circonférentielles peu profondes (21a, 31a) ou d'une longueur totale des lignes de contour des rainures peu profondes dans le sens de la largeur (21b, 31b) est plus longue que l'autre dans la région centrale ou dans les régions d'épaulement.

3. Bandage pneumatique pour un motocycle selon les revendications 1 ou 2, dans lequel, lorsqu'une région de contact au sol de la partie de bande de roulement (40), au cours du roulement en ligne droite, est définie comme une région centrale et lorsque les deux côtés externes de la région centrale, dans une direction de la largeur du bandage pneumatique, sont définis comme des régions d'épaulement, au moins deux types de rainures peu profondes (41a, 41a') ayant une largeur comprise entre 0,1 et 2,0 mm et une profondeur comprise entre 0,1 et 2,0 mm et s'étendant dans des directions différentes, sont formés dans une pluralité dans au moins les régions d'épaulement, au moins certaines des rainures peu profondes (41a, 41a') se coupant, et au moins certaines des rainures peu profondes (41a) étant ouvertes au niveau d'une extrémité de la bande de roulement.

4. Bandage pneumatique pour un motocycle selon les revendications 2 ou 3, dans lequel le nombre de rainures peu profondes dans la région centrale est supérieur à celui existant dans les régions d'épaulement de la partie de bande de roulement.

5. Bandage pneumatique pour un motocycle selon l'une quelconque des revendications 2 à 4, dans lequel la profondeur des rainures peu profondes dans la région centrale est supérieure à celle existant des régions d'épaulement de la partie de bande de roulement.

6. Bandage pneumatique pour un motocycle selon l'une quelconque des revendications 2 à 5, dans lequel la largeur des rainures peu profondes dans la région centrale est supérieure à celle existant dans les régions d'épaulement de la partie de bande de roulement.

7. Bandage pneumatique pour un motocycle selon les revendications 2 ou 3, dans lequel le nombre de rainures peu profondes (41a, 41a') dans les régions d'épaulement est supérieur à celui existant dans la région centrale de la partie de bande de roulement (40).

8. Bandage pneumatique pour un motocycle selon l'une quelconque des revendications 2 à 4, dans lequel la profondeur des rainures peu profondes dans les régions d'épaulement est supérieure à celle existant dans la région centrale de la partie de bande de roulement.

9. Bandage pneumatique pour un motocycle selon l'une quelconque des revendications 2 à 5, dans lequel la largeur des rainures peu profondes dans les régions d'épaulement est supérieure à celle existant dans la région centrale de la partie de bande de roulement.

10. Bandage pneumatique pour un motocycle selon l'une quelconque des revendications 1 à 9, dans lequel les rainures peu profondes (11a, 21a, 31a, 41a, 41a') sont continues dans la direction circonférentielle.
